# EUROPÄISCHE PATENTSCHRIFT

(11) **EP 0 310 932 B1**
(45) Veröffentlichungstag und Bekanntmachung des Hinweises auf die Patenterteilung: **08.06.1994**
(21) Anmeldenummer: 88116015.4
(22) Anmeldetag: 28.09.1988
(51) Int. Cl.: G08B 13/184, G08B 13/18, G01V 9/04

(54) **Reflexionslichtschranke**
Light barrier with reflector
Barrière lumineuse à réflecteur

(30) Priorität: 05.10.1987 DE 3733656
(43) Veröffentlichungstag der Anmeldung: 12.04.1989
(73) Patentinhaber: HÖRMANN KG BIELEFELD, D-33607 Bielefeld (DE)
(72) Erfinder: Hörmann, Stephan, Dipl.-Phys., D-4830 Gütersloh (DE)
(74) Vertreter: Flügel, Otto, Dipl.-Ing.

(56) Entgegenhaltungen:
- EP-A- 0 005 852
- EP-A- 0 200 186
- US-A- 4 224 608

## Beschreibung

Die Erfindung betrifft eine Reflexionslichtschranke gemäß dem Oberbegriff des Hauptanspruches.

Es sind früher Einweglichtschranken mit nur einem Sender und einem Empfänger vorgesehen worden, die zwischen sich die zu überwachende Strecke einschließen. Diese Einweglichtschranken können gegen Fremdlicht und Störeinflüsse durch Filter, Verwendung von Infrarotlicht, getakteter Lichtfolge immun gemacht werden.

Es ist ferner eine einfache Reflexionslichtschranke bekannt, bei der sich eine Sender-Empfängereinheit auf der einen Seite der zu überwachenden Strecke befindet und einen Reflektor auf der anderen Seite. Der Vorteil einer solchen Anordnung liegt darin, daß die elektrische Installation nur auf einer Seite der Strecke nötig ist. Hauptnachteil der Reflexionslichtschranke ist die aus sicherheitstechnischer Sicht mangelnde Zuverlässigkeit, denn ein Hindernis mit hoher Reflektivität wird von der Reflexionslichtschranke ebensowenig wahrgenommen wie etwa ein transparenter Gegenstand von der Einweglichtschranke.

Aus diesem Grund ist schließlich eine gattungsgemäße sogenannte Reflexionslichtschranke gemäß dem Oberbegriff des Hauptanspruches bekannt, die mit transversal polarisiertem Licht als der von dem Sender abgegebene Strahlung arbeitet vgl. z.B. EP-A-0005852. Als Reflektor wird ein optisch aktiver Reflektor verwendet, der die Polarisationsebene des reflektierenden Lichtes gegen jene des einfallenden um einen rechten Winkel dreht. Der Empfänger ist schließlich mit einem auch Analysator genannten Polarisationsfilter versehen, dessen Polarisationsebene parallel Zu jener der reflektierten Lichtes des Reflektors verläuft.

Kommt ein einfach reflektierendes Hindernis in die zu überwachende Strecke, so erhält der Empfänger direkt das vom Sender polarisierte Licht, wobei der Polarisator des Senders aber eine rechtwinklig zu der Polarisationsebene des Analysators ausgerichtete Polarisationsebene aufweist. Der Empfänger "sieht" infolgedessen kein Licht, was im Umkehrschluß bedeutet, daß sich ein Hindernis in der Strecke befindet.

Unter ungünstigen Bedingungen, beispielsweise sehr hoher Reflektivität des Hindernisses und einem sehr geringen Abstand von dem Sender bzw. dem Empfänger kann es gleichwohl vorkommen, daß der Empfänger dennoch ein falsches Ausgangssignal bewirkt, da der Analysator noch eine gewisse Restintensität durchläßt.

Der Erfindung liegt deshalb die Aufgabe zugrunde, eine gattungsgemäße Reflexionslichtschranke zuverlässiger auszugestalten.

Diese Aufgabe wird bei einer gattungsgemäßen Lichtschranke gemäß dem Oberbegriff des Hauptanspruches erfindungsgemäß durch dessen kennzeichnende Merkmale gelöst.

Im Betrieb und ohne Hindernis wird also vom Reflektor die Polarisationsebene um 45° gedreht. Bezüglich dieser Ebene sind die Analysatoren dabei so angeordnet, daß sie die Winkelhalbierende des zwischen den beiden Polarisationsebenen der Analysatoren aufgespannten Winkels bildet, wobei die Polarisationsebenen der beiden Analysatoren zueinander rechtwinklig verlaufen. Dies bedeutet, daß das vom Reflektor reflektierte Licht von beiden Empfängern gleichstark empfangen wird. Verhältnis der Empfängersignale ist "1"). Jeder Empfänger gibt ein zu der Intensität der empfangenen Strahlung ungefähr proportionale elektrische Spannung ab, die von einem Komparator verglichen wird. Der Ausgang des Komparators gibt nur dann kein Signal ab, was einem Hin dernis in der Strecke entspricht, wenn das Verhältnis der von den beiden Empfängern abgegebenen Spannung um ein bestimmtes Maß von "1" abweicht.

Es ist bemerkenswert, daß auch transparente Gegenstände mit großer Sicherheit erkannt werden, weil sie das Licht vom Sender an ihre Oberfläche reflektieren, ohne jedoch dessen Polarisationsebene zu drehen, was unterschiedliche Spannung am Ausgang der beiden Empfänger hervorruft.

Kommt hingegen ein einfach reflektierendes Hindernis in die zu überwachende Strecke, so wird das aufgrund des Polarisators am Sender polarisierte Licht direkt - ohne Drehung durch den optisch aktiven Reflektor - reflektiert. In diesem Falle ist die Polarisationsebene des Polarisators parallel zu jener eines der beiden Analysatoren und senkrecht zu der Polarisationsebene des anderen Analysators angeordnet. Infolgedessen ergeben sich - selbst wenn der Schwellwertschalter beider Empfänger anspricht - am Eingang des Komparator entscheidend unterschiedliche Eingangsspannungen, so daß die Anwesenheit des Hindernisses erkannt wird.

Eine zweckmäßige Ausgestaltung und Weiterbildung der Erfindung ist im Unteranspruch gekennzeichnet.

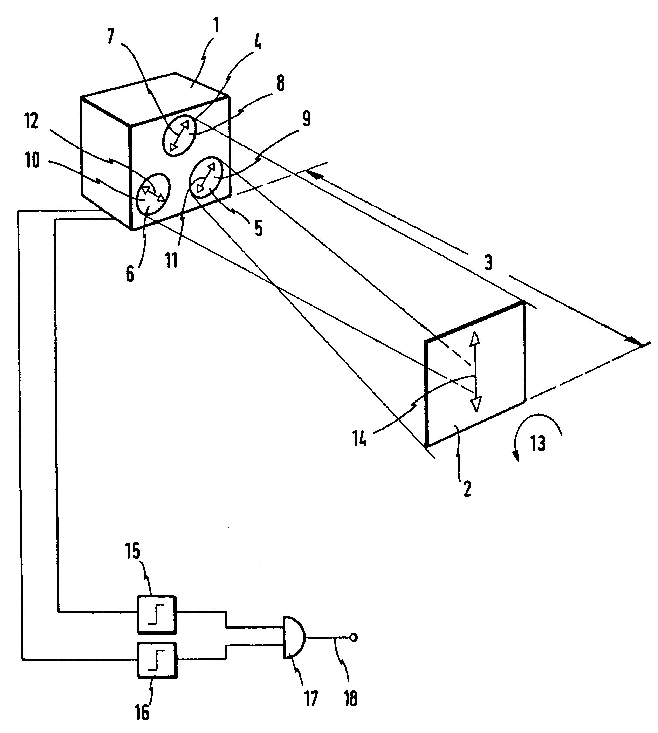

Ein bevorzugtes Ausführungsbeispiel wird nachfolgend unter Bezugnahme auf die Zeichnung näher erläutert, die eine schematische Darstellung einer Reflexionslichtschranke gemäß der Erfindung zeigt.

Mit 1 ist die Sender-Empfängereinheit und mit 2 der Reflektor bezeichnet, die zwischen sich die zu überwachende Strecke 3 aufweisen. In der Sender-Empfängereinheit sind der insgesamt mit 4 bezeichnete Sender und zwei Empfänger 5, 6 vorgesehen. Der Sender 4 ist mit einem Polarisator 8 mit einer schematisch mit 7 bezeichneten Polarisationsebene und die beiden Empfänger 5, 6 mit Analysatoren 9, 10 versehen, deren schematisch mit 11 bzw. 12 bezeichnete Polarisationsebenen zueinander senkrecht stehen. Die Polarisationsebene 11 des Analysators 9 ist parallel zur Polarisationsebene 7 des Polarisators 8 angeordnet.

Ferner weist der Reflektor 2 eine optische Aktivität auf und dreht die Polarisationsebene des einfallenden Lichtes um 45° im schematisch mit 13 bezeichneten Gegenuhrzeigersinn, so daß die Polarisationsebene 14 des reflektierten Lichtes mit jener 7 des Polarisators 8 des Senders 4 einen Winkel von 45° einschließt. Ferner bildet die Polarisationsebene 14 die Winkelhalbierende der beiden Polarisationsebenen 11, 12 der Analysatoren 9, 10.

Jeder der beiden Empfänger 5, 6, die ein der empfangenen elektrischen Intensität abhängiges elektrisches Signal abgeben, ist an einem Schwellwertschalter 15, 16 angeschlossen, die erst kein Ausgangssignal bei Unterschreiten eines bestimmten Pegels abgeben, sondern nur ein analoges Signal darüber. Die beiden Ausgänge der Schwellwertschalter 15, 16 sind mit den Eingängen eines insgesamt mit 17 bezeichneten Komparators verbunden, dessen Ausgang 18 das Ausgangssignal dann abgibt, wenn, sich kein Hindernis innerhalb der Strecke 3 befindet. Der Komparator 17 vergleicht beide analogen Signale und gibt nur bei Unterschreiten eines vorherbestimmbaren Unterschiedes das Ausgangssignal ab.

Taucht hingegen ein Hindernis in der Strecke 3 auf, so empfängt entweder keiner der beiden Empfänger Licht oder (bei einem Gegenstand verschwindender Reflektivität) oder bei einem reflektierenden Hindernis nur einer der beiden Empfänger das zu ihm parallel verlaufende polarisierte Licht. Dann aber wird kein Ausgangssignal 18 abgegeben, was bedeutet, daß sich ein Hindernis in der zu überwachenden Strecke befindet.

## Patentansprüche

1. Reflexionslichtschranke mit einem eine elektromagnetische Strahlung, vorzugsweise Licht abgebenden Sender (4) mit einem Polarisator in (8), einem von diesem entfernt unter Bildung der überwachenden Strecke (3) liegenden Reflektor (2), der die Polarisationsebene der Strahlung um einen bestimmten Winkel dreht, und mit einem auf diese Strahlung ansprechenden sowie ein Ausgangssignal bei freier Strecke abgebenden Empfänger, der einen Analysator aufweist,
**dadurch gekennzeichnet,** daß der Empfänger zweigeteilt mit einem ersten Empfänger (5) und einem zweiten Empfänger (6) ausgebildet ist und der erste und zweite Empfänger je mit einem eine Polarisationsebene (11, 12) durchlassenden ersten und zweiten Analysator (9, 10) versehen ist, daß beide Analysatoren (9, 10) und der Reflektor (2) so angeordnet sind, daß die Polarisationsebene (14) der von ihm reflektierten Strahlung die Winkelhalbierende des zwischen den beiden Polarisationsebenen (11, 12) der zwei Analysatoren (9, 10) eingeschlossenen Winkels bildet, daß die Polarisationsebene (7) des Polarisators (8) des Senders (4) parallel zu einer der Polarisationsebenen der beiden Analysatoren (9, 10), d.h. entweder des ersten oder der des zweiten Empfängers (5, 6) verläuft und daß jedem Empfänger (5, 6) ein bei Empfang von reflektierter Strahlung unter einer bestimmten Schwelle kein und darüber ein von der Intensität der empfangenen Strahlung abhängiges analoges Signal abgebender Schnellwertschalter (15, 16) zugeordnet und diesem ein Komparator nachgeordnet ist, der die beiden analogen Signale miteinander vergleicht und dessen Ausgang bei Überschreiten eines bestimmten Unterschiedes kein und bei Unterschreiten das Ausgangssignal abgibt.

2. Reflexionslichtschrankte nach Anspruch 1,
**dadurch gekennzeichnet,** daß die Polarisationsebene (11, 12) der beiden Analysatoren (9, 10) rechtwinklig aufeinander stehen.

## Claims

1. Light barrier with reflector, having a transmitter (4) which emits electromagnetic radiation, preferably light, and having a polariser in (8), a reflector (2) remote therefrom which forms the pathway (3) to be monitored, this reflector rotating the plane of polarisation of the radiation through a certain angle, and having a receiver which responds to this radiation and emits an output signal when the pathway is free and which also has an analyser, characterised in that the receiver is constructed in two parts with a first receiver (5) and a second receiver (6) and the first and second receivers are provided with first and second analysers (9,10) which let through a plane of polarisation (11, 12), the two analysers (9,10) and the reflector (2) are arranged so that the plane of polarisation (14) of the radiation reflected by it form the bisector of the angle defined between the two polarisation planes (11,12) of the two analysers (9,10), the polarisation plane (7) of the polariser (8) of the transmitter (4) being parallel to one of the polarisation planes of the two analysers (9,10), ie. of either the first or second receiver (5,6) and that each receiver (5,6) is associated with a threshold switch (15,16) which emits no signal when reflected radiation below a certain threshold is received and emits an analogue signal dependent on the intensity of the radiation received if it is above said threshold, and downstream of this threshold switch (15,16) is a comparator which compares the two analogue signals with each other and the output of which emits no output signal if a certain difference is exceeded and does emit an output signal if a certain difference is not attained.

2. Light barrier with reflector according to claim 1, characterised in that the polarisation planes (11,12) of the two analysers (9,10) are at right angles to one another.

## Revendications

1. Barrière lumineuse à réflecteur avec un émetteur (4) délivrant un rayonnement électromagnétique, de préférence de la lumière, avec un polariseur (8), un réflecteur (2) se trouvant éloigné de celui-ci en constituant le trajet à surveiller (3), réflecteur qui fait tourner le plan de polarisation du rayonnement d'un angle déterminé et avec un récepteur réagissant à ce rayonnement et délivrant en même temps un signal de sortie quand le trajet est libre, récepteur qui présente un analyseur, barrière lumineuse à réflecteur caractérisée en ce que :
le récepteur est constitué en deux parties avec un premier récepteur (5) et un deuxième récepteur (6) et le premier et le deuxième récepteur sont chacun pourvus d'un premier analyseur et d'un second analyseur (9, 10) laissant passer un plan de polarisation (11, 12), en ce que les deux analyseurs (9, 10) et le réflecteur (2) sont disposés de telle façon que le plan de polarisation (14) du rayonnement réfléchi par lui constitue la bissectrice de l'angle compris entre les deux plans de polarisation (11, 12) des deux analyseurs (9, 10), en ce que le plan de polarisation (7) du polariseur (8) de l'émetteur (4) s'étend parallèlement à l'un des plans de polarisation des deux analyseurs (9, 10), c'est-à-dire soit du premier soit de celui du deuxième récepteur (5, 6), et en ce qu'à chaque récepteur (5, 6) est associé un interrupteur à valeur de seuil (15, 16) qui ne délivre aucun signal lors de la réception du rayonnement réfléchi en dessous d'un seuil déterminé et qui délivre au-dessus de ce seuil un signal analogique fonction de l'intensité du rayonnement reçu, cet interrupteur étant suivi d'un comparateur qui compare les deux signaux analogiques l'un à l'autre et dont la sortie ne délivre pas de signal quand une différence déterminée est dépassée et délivre le signal de sortie quand cette différence n'est pas dépassée.

2. Barrière lumineuse à réflecteur selon la revendication 1, caractéérisée en ce que les plans de polarisation (11, 12) des deux analyseurs (9, 10) se trouvent) angle droit l'un par rapport à l'autre.
